# EUROPEAN PATENT SPECIFICATION

(11) **EP 0 540 012 B1**
(45) Date of publication and mention of the grant of the patent: **24.04.1996**
(21) Application number: 92118565.8
(22) Date of filing: 30.10.1992
(51) Int. Cl.: E01F 15/00, B29C 70/00

(54) **A safety barrier and a process for its production**
Schutzplanke und dazugehörendes Produktionsverfahren
Glissière de sécurité routière et sa méthode de fabrication

(30) Priority: 31.10.1991 IT SA910011
(43) Date of publication of application: 05.05.1993
(73) Proprietor: SIGEM S.r.l., I-84047 Capaccio (Salerno) (IT)
(72) Inventor: Garofalo, Ercole, I-84047 Capaccio (Salerno) (IT); Musto, Mariagrazia, I-84043 Agropoli (Salerno) (IT)
(74) Representative: Rambelli, Paolo

(56) References cited:
- CH-A- 410 036
- CH-A- 449 689
- DE-A- 1 960 908
- DE-A- 3 345 009
- DE-U- 6 942 683
- GB-A- 2 144 683
- US-A- 3 233 870

## Description

The present invention relates to a road safety barrier of the type including at least one elongate beam which has fixing means for its connection to vertical support elements and extends horizontally between the support elements, the beam including a core of synthetic resin and being obtainable by pultrusion.

The safety barriers currently in use are normally made of various materials such as steel, galvanised iron and concrete; however, these materials have disadvantages connected with their cost and/or their heavy weight.

US-A-3 233 870 describes a road safety barrier of the above-mentioned type, with an elongate beam including a core of synthetic resin, which can be produced by pultrusion.

DE-U-6 942 683 describes a road safety barrier with a beam made by casting in a mould, including steel bars as inlays in a core of synthetic resin reinforced by means of a glass fibre mat.

There is a need to provide safety barriers of a new construction which are lighter and less expensive and which, at the same time, have good mechanical strength characteristics.

For this purpose, a subject of the invention is a safety barrier as defined by the appended claims.

The synthetic resin in which the reinforcing fibres and wires are incorporated is preferably a thermosetting resin, preferably an unsaturated polyester resin which can provide adequate resistance to atmospheric and chemical agents and to thermal stress, as well as good impact strength, which is an essential characteristic for safety barriers. However, the use of other types of resin such as, for example, bisphenolic resins is not excluded.

In comparison with other materials, glass-fibre-reinforced polyester resin offers various advantages, the main advantages being:
- a better breaking-load to weight ratio; its weight is about 2/3 of the weight of aluminium and 1/4 of the weight of steel,
- good resistance to corrosion and to the transfer of heat,
- good impact strength,
- dimensional stability and a substantial absence of deterioration due to atmospheric agents so that maintenance operations are not necessary.

It has been found that the combined use of glass fibres and continuous steel wires further improves, in particular, the impact strength characteristics. Steel wires, which have good mechanical strength together with excellent resistance to stretching within their elastic range, allow further stretching in the permanent deformation range without breakage. These characteristics ensure that, in the event of a very violent impact, the vehicle is restrained within the carriageway since the protective barrier is deformed without being broken.

Typically, the continuous glass fibres and steel wires are disposed in alternating bundles so as to ensure uniform mechanical strength. Typically, the mixture of fibres and wires includes from 1 to 70% by volume of glass fibres and from 1 to 70% by volume of steel wires with reference to 100% of the total volume of fibres and wires, preferably from 30 to 70% of glass fibres and from 70 to 30% by volume of steel wires.

The ratio by weight between the fibres and the wires with respect to the total weight of the core is typically between 15 and 80%, preferably about 20-50% by weight. The resin constituting the matrix may also include mineral fillers such as calcium carbonate and silicates; the core produced by pultrusion includes up to 50% by weight of fillers incorporated in the matrix resin.

Further advantages and characteristics of the safety barrier according to the invention will be described with reference to the appended drawings, provided by way of non-limiting example, in which:
Figure 1 is a schematic illustration of the pultrusion process,
Figure 2 is a perspective view of a beam constituting a safety barrier, and
Figure 3 is a section taken on the line III-III of Figure 2.

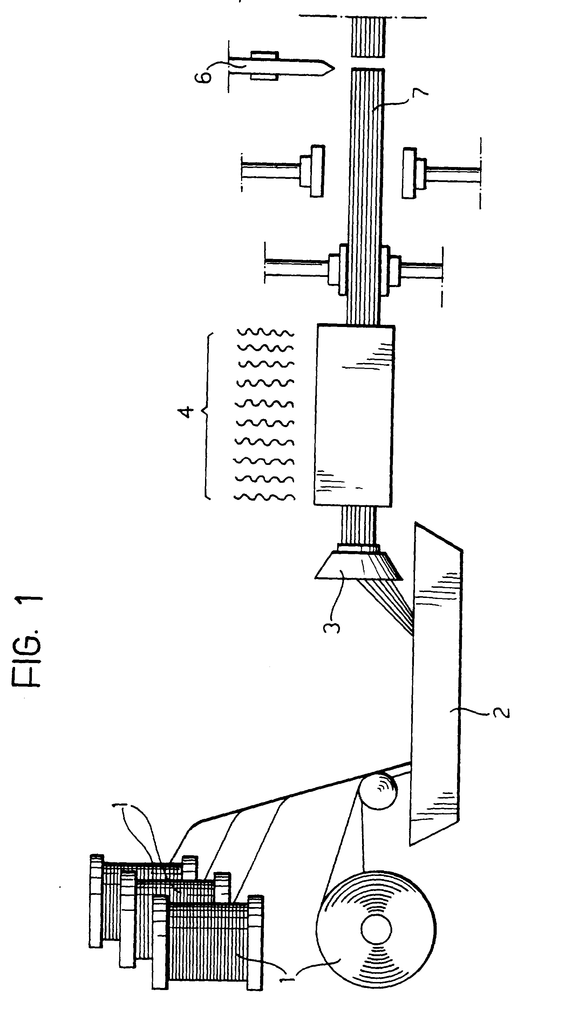

Manufacture by the pultrusion process illustrated schematically in Figure 1 is a known method in which each fibrous reinforcing filament ("roving") is completely impregnated with resin, preheated and stretched, after which the impregnated reinforcing filaments are brought together and drawn through a long heated die which confers a predetermined shape. The high density of fibrous elements and the considerable pressure to which they are subjected means that all the spaces and residues of material are eliminated, making the finished product very homogeneous and compact. The resulting product is a prestressed structural component.

In the method according to the invention, the bundle of "roving" includes steel wires which are immersed in the matrix resin. With reference to the drawing, supply means, schematically indicated 1, supply the glass fibres and the steel wires which are passed through a tank 2 in which they are wetted and/or impregnated with the synthetic resin. The time spent in the tank and the metering of the resin are regulated so as to ensure adequate impregnation and wetting. The fibres and steel wires are brought together in a preforming device 3 in order to position them for admission to a die 4 which is heated by electrical resistance and from which a section 7 is drawn and is cut to the desired lengths by means of a cutting machine 6.

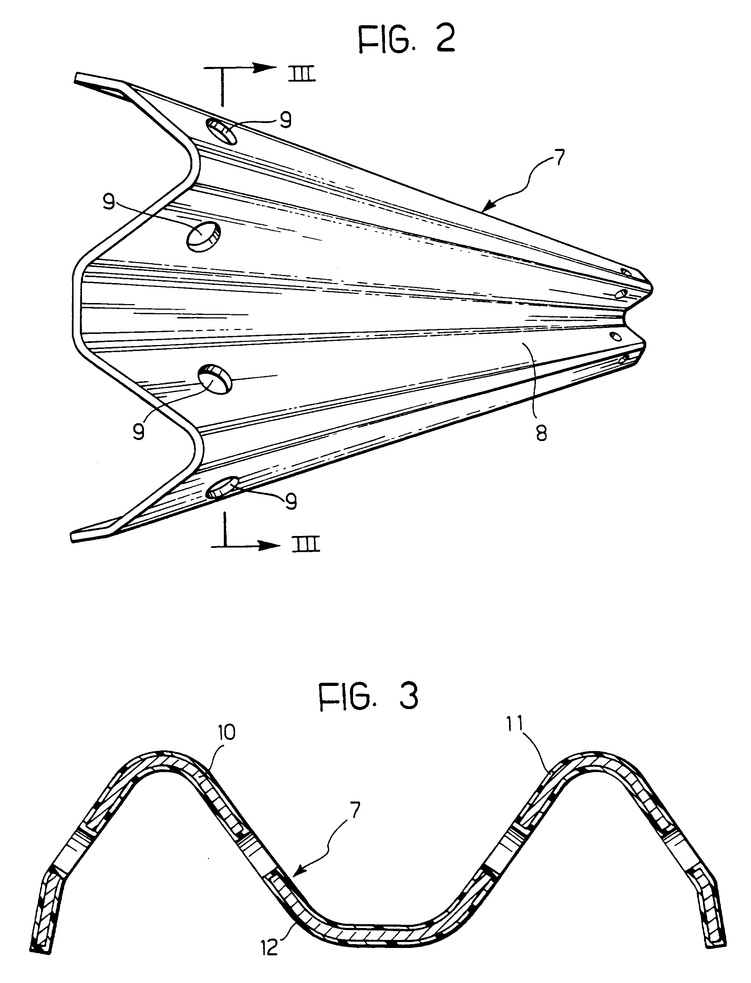

The section 7, which is intended to constitute the beam element of the safety barrier shown in Figures 2 and 3, has a corrugated cross-section which defines a channel 8 in order to improve its bending strength characteristics. Through-holes are indicated 9 and, in the embodiment illustrated, act as fixing means for anchorage to vertical uprights, not shown. It is intended that the fixing means, as well as the upright supports, may have any configuration which is practical, according to the specific application.

The beam element 7 may also have other configurations, for example, a hollow box structure, which can also be produced by the pultrusion process.

As shown in Figure 3, in addition to a core 10 formed by glass fibres and steel wires disposed parallel to the axis of the section, and impregnated with the synthetic matrix resin, the cross-section of the beam element or section 7 may also include one or more reinforcing layers 11, 12 formed by glass-fibre "mats" with the fibres preferably disposed in perpendicular bundles.

According to a further characteristic of the invention, the synthetic resin may be filled with a luminescent or chemiluminescent material or with substances suitable for reflecting a light beam. For these purposes, for example, flakes or microspheres of glass or quartz may be incorporated in the synthetic resin as fillers. Alternatively, luminescent or reflective materials may be applied to the surface of the beam element as surface layers. For example, surface layers of flakes or granules of glass or a similar reflective or refractive material may be applied by a method which comprises sticking the flaked material onto an auxiliary support strip by means of an adhesive, feeding the strip thus produced through the pultrusion die so as to cause the strip to stick to the pultruded core as a surface layer, and then removing the auxiliary strip so as to leave the reflective material exposed and adhering to the synthetic resin.

## Claims

1. A road safety barrier, including at least one elongate beam (7) with fixing means (9) for its connection to support elements and extending horizontally between the support elements, the beam including a core (10) of synthetic resin and being obtainable by pultrusion, characterised in that the core is reinforced with a mixture of continuous glass fibres and continuous steel wires extending parallel to the longitudinal axis of the beam.

2. A safety barrier according to Claim 1, characterised in that it includes one or more reinforcing layers (11, 12) formed by fibre "mats" disposed on one or both faces of the core.

3. A safety barrier according to Claim 1, characterised in that the beam has a corrugated cross-section.

4. A safety barrier according to any one of Claims 1 to 3, in which the core includes from 15 to 80% by weight of fibres and wires with reference to the total weight of filaments and resin.

5. A safety barrier according to any one of Claims 1 to 4, in which the core includes from 1 to 70% by volume of continuous glass fibres and from 1 to 70% by volume of steel wires with reference to the total volume of fibres and wires.

6. A safety barrier according to any one of Claims 1 to 4, characterised in that the core includes from 30 to 70% by volume of continuous glass fibres and from 70 to 30% by volume of steel wires.

7. A safety barrier according to any one of Claims 1 to 6, in which the synthetic resin includes luminescent and/or reflective substances.

8. A safety barrier according to any one of Claims 1 to 6, in which the elongate beam includes at least one surface layer of reflective material formed by granules or flakes of reflective material incorporated in the surface of the synthetic resin.

## Patentansprüche

1. Straßenleitplanke umfassend mindestens einen Längsbalken (7) mit Befestigungsmitteln (9), die diesen mit Stützelementen verbinden und sich horizontal zwischen den Stützelementen erstrecken, wobei der Balken mit Hilfe von Pultrusion herstellbar ist und einen Kern (10) aus synthetischem Harz aufweist, dadurch gekennzeichnet, daß der Kern mit einer Mischung aus endlosen Glasfasern und endlosen Stahldrähten, die sich parallel zur Längsachse des Balkens erstrecken, verstärkt ist.

2. Leitplanke nach Anspruch 1, dadurch gekennzeichnet, daß sie eine oder mehrere von Faser-"Matten" gebildete Verstärkungsschichten (11, 12) umfaßt, die an einer oder beiden Seiten des Kerns angeordnet sind.

3. Leitplanke nach Anspruch 1, dadurch gekennzeichnet, daß der Balken einen gerippten Querschnitt aufweist.

4. Leitplanke nach einem der Ansprüche 1 bis 3, bei der der Kern 15 bis 80 Gew.% Fasern und Drähte bezogen auf das Gesamtgewicht von Filamenten und Harz enthält.

5. Leitplanke nach einem der Ansprüche 1 bis 4, bei der der Kern 1 bis 70 Vol.% endlose Glasfasern und 1 bis 70 Vol.% Stahldrähte bezogen auf das Gesamtvolumen von Fasern und Drähten enthält.

6. Leitplanke nach einem der Ansprüche 1 bis 4, dadurch gekennzeichnet, daß der Kern 30 bis 70 Vol.% endlose Glasfasern und 70 bis 30 Vol.% Stahldrähte enthält.

7. Leitplanke nach einem der Ansprüche 1 bis 6, bei der das synthetische Harz lumineszierende und/oder reflektierende Stoffe enthält.

8. Leitplanke nach einem der Ansprüche 1 bis 6, bei der der Längsbalken mindestens eine Oberflächenschicht aus reflektierendem Material in Form von Körnchen oder Flocken aus reflektierendem Material umfaßt, die in die Oberfläche des synthetischen Harzes eingebettet sind.

## Revendications

1. Glissière de sécurité routière, comprenant au moins un profilé allongé (7) pourvu de moyens de fixation (9) destinés à le relier à des éléments formant support, et s'étendant horizontalement entre les élements formant support, le profilé comprenant une âme (10) en résine synthétique et pouvant être fabriqué par pultrusion, caractérisée en ce que l'âme est renforcée par un mélange de fibres de verre continues et de fils d'acier continus s'étendant parallèlement à l'axe longitudinal du profilé.

2. Glissière de sécurité selon la revendication 1, caractérisée en ce qu'elle comprend une ou plusieurs couches de renforcement (11, 12) formées par des "matelas" de fibres disposés sur l'une ou les deux faces de l'âme.

3. Glissière de sécurité selon la revendication 1, caractérisée en ce que le profilé possède une section transversale striée.

4. Glissière de sécurité selon l'une quelconque des revendications 1 à 3, dans laquelle l'âme comprend de 15 à 80 % en poids de fibres et de fils par rapport au poids total des filaments et de la résine.

5. Glissière de sécurité selon l'une quelconque des revendications 1 à 4, dans laquelle l'âme comprend de 1 à 70 % en volume de fibres de verre continues et de 1 à 70 % en volume de fils d'acier par rapport au volume total de fibres et de fils.

6. Glissière de sécurité selon l'une quelconque des revendications 1 à 4, caractérisée en ce que l'âme comprend de 30 à 70 % en volume de fibres de verre continues et de 70 à 30 % en volume de fils d'acier.

7. Glissière de sécurité selon l'une quelconque des revendications 1 à 6, dans laquelle la résine synthétique comprend des substances luminescentes et/ou réfléchissantes.

8. Glissière de sécurité selon l'une quelconque des revendications 1 a 6, dans laquelle le profilé allongé comprend au moins une couche superficielle de matériau réfléchissant formée par des granulés ou des flocons de matériau réfléchissant incorporés dans la surface de la résine synthétique.
